Europäisches Patentamt

European Patent Office

Office européen des brevets

(19)

(11) Veröffentlichungsnummer: **0 031 485**
**B1**

(12)

# EUROPÄISCHE PATENTSCHRIFT

(45) Veröffentlichungstag der Patentschrift:
11.07.84

(51) Int. Cl.³: **G 06 F 3/04**, G 06 F 9/46

(21) Anmeldenummer: 80107606.8

(22) Anmeldetag: 04.12.80

(54) **Prioritätseinrichtung für eine Einheit einer Datenverarbeitungsanlage mit einer Daten-Sammelleitung.**

(30) Priorität: 28.12.79 US 108069

(43) Veröffentlichungstag der Anmeldung:
08.07.81 Patentblatt 81/27

(45) Bekanntmachung des Hinweises auf die Patenterteilung:
11.07.84 Patentblatt 84/28

(84) Benannte Vertragsstaaten:
DE FR GB

(56) Entgegenhaltungen:
FR - A - 2 418 494
US - A - 3 983 540
US - A - 4 120 029

IBM TECHNICAL DISCLOSURE BULLETIN, vol. 22, no. 2,
Juli 1979 New York, US BANTZ et al. "Bus architecture
with centralized allocation and decentralized simplified
adaptive channel assignment", Seiten 863-865
IBM TECHNICAL DISCLOSURE BULLETIN, vol. 23, no. 4,
September 1980 New York, US EDGAR "Bus arbitration
logic", Seiten 1323-1325

(73) Patentinhaber: **International Business Machines
Corporation, Old Orchard Road, Armonk, N.Y. 10504 (US)**

(72) Erfinder: **Oblonsky, Jan Gustav, 3005 Quail Hollow
Terrace, Brookeville, MD-20729 (US)**

(74) Vertreter: **Lewit, Leonard, Dipl.-Ing., Schönaicher
Strasse 220, D-7030 Böblingen (DE)**

## Beschreibung

Die Erfindung betrifft eine Prioritätseinrichtung für eine Einheit einer Datenverarbeitungsanlage, die mit einer Vielzahl von Einheiten dieser Datenverarbeitungsanlage an eine Daten-Sammelleitung angeschlossen ist. Die Übertragung von Nachrichten zwischen den verschiedenen an die Sammelleitungen angeschlossenen Einheiten wirft dann Probleme auf, wenn zwei oder mehr Einheiten gleichzeitig Nachrichten über die Sammelleitung senden wollen. Ein solches Zugriffsproblem kann durch die Zuteilung von Prioritäten zu den verschiedenen Anschlusseinheiten gelöst werden. Bei diesen Anschlusseinheiten kann es sich beispielsweise um einen Prozessor einer Datenverarbeitungsanlage, um einen Drucker, um ein Eingabegerät, usw... handeln. Die übertragenen Daten bestehen demgemäss aus der eigentlichen Nachricht, aus Adressen des Senders und Empfängers, aus Fehlersicherungsbits, usw. Die Daten-Sammelleitung kann beispielsweise aus einem Koaxialkabel bestehen, über das die einzelnen Bits der Nachrichten seriell übertragen werden. Alternativ kann eine aus vielen Einzelleitungen bestehende Sammelleitung vorgesehen werden, über die somit gleichzeitig mehrere Bits übertragen werden können. Nachfolgend soll davon ausgegangen werden, dass nur eine einzelne Koaxialleitung zur Übertragung der Nachrichten zur Verfügung steht. Als Beispiel kann angenommen werden, dass eine Nachricht 16 Bits enthält, die in zwei aufeinanderfolgenden Bytes übertragen werden. Zur Übertragung dieser beiden Bytes steht ein Zeitfach auf der Sammelleitung zur Verfügung. Im nachfolgenden Zeitfach kann entweder dieselbe Einheit nochmals zwei Bytes übertragen, oder aber es kann die Bewerbung einer anderen Einheit um Zugriff zur Sammelleitung honoriert werden und es können somit im nachfolgenden Zeitfach 2 Bytes der anderen Einheit übertragen werden. Die Arbeitsweise der einzelnen Einheiten ist dabei synchronisiert, so dass zwischen der Übertragung von einzelnen Nachrichten keine Lücken entstehen.

Eine einfache Lösung von Zugriffskonflikten kann darin bestehen, dass jeweils bestimmte Zeitfächer den einzelnen Einheiten zur Übertragung von Nachrichten zugeteilt werden. Hat die betreffende Einheit dann keine Nachrichten zu übertragen, verstreicht das Zeitfach ungenutzt. Nach einer anderen einfachen Lösung kann eine Einheit Nachrichten im nächsten freien Zeitfach übertragen. Hierdurch können jedoch relativ grosse Wartezeiten für einzelne Einheiten entstehen.

In den meisten Systemen wird jedoch getrachtet ein optimales Verhältnis zwischen der Übertragungskapazität der Sammelleitung und der Anzahl angeschlossener Einheiten zu erzielen. Dabei wird getrachtet eine möglichst hohe Anzahl der zur Verfügung stehenden Zeitfächer zur Übertragung von Nachrichten auszunützen. Hierbei können jedoch Probleme dadurch entstehen, dass mehrere Einheiten gleichzeitig die Sammelleitung anfordern.

Zur Lösung von Zugriffskonflikten können, wie bereits erwähnt, den einzelnen Einheiten binär dargestellte Prioritätszahlen zugeteilt werden, welche laufend mit einem fortschaltenden Zähler verglichen werden (FR-PS 3 418 494). Wird beispielsweise der Einheit A der Prioritätscode 0010 (dezimal 2) und der Einheit B die binäre Zahl 0110 (dezimal 6) zugewiesen, so wird beim Abzählen der einzelnen Einheiten von 0 aufwärts zuerst die der Einheit A entsprechende Prioritätszahl erreicht und damit der Einheit A Priorität über die Sammelleitung gegeben. Als Variation zu diesem Prioritätsschema kann vorgesehen werden, dass Einheiten mit sehr hoher Priorität manchmal auf ihre Priorität verzichten müssen, um auch Einheiten mit niedrigerer Priorität den Zugriff zur Sammelleitung zu ermöglichen. Die einer Einheit zugewiesene Prioritätszahl kann beispielsweise in einem Register gespeichert werden und es kann ein Zähler vorgesehen werden, der nacheinander alle möglichen Prioritätszahlen erzeugt. Erreicht der Zähler einer bestimmten Einheit die in der selben Einheit gespeicherte Prioritätszahl, so kann ein Anforderungssignal erzeugt werden, das beispielsweise über eine gemeinsame Anforderungs-Sammelleitung allen anderen Anschlusseinheiten zugeführt werden kann und die Berücksichtigung von Einheiten mit niedrigerer Prioritätszahl verhindert. Ein solcher Zähler müsste in einem Zeitfach bis zur höchst möglichen Prioritätszahl zählen können, was die Verwendung von sehr schnellen und daher teuren Schaltungselementen mit sich bringt. Auch an den Vergleicher und an die angeschlossene Logik werden hohe Anforderungen gestellt.

Aus der US-PS 3 983 540 ist eine Prioritätseinrichtung bekanntgeworden, welche mit den verschiedenen Einheiten festzugeteilten Prioritätszahlen arbeitet. Jede Prioritätszahl ist dabei in zwei Teile unterteilt, wobei für beide Teile jeweils eine kombinierte Vergleichs- und Torschaltung vorgesehen ist. Diese Schaltungen sind für beide Teile identisch. Jeder Teil der Prioritätszahl wird durch Schliessen eines von mehreren Schaltern gebildet. Zur Prioritätsregelung sind alle Einheiten untereinander über eine primäre und eine sekundäre Prioritätssammelleitung verbunden, über die jeweils für den primären und sekundären Teil der Prioritätszahl Prioritätskonflikte gelöst werden können. Durch die Verwendung von zwei getrennten Prioritätssammelleitungen ergeben sich Geschwindigkeitsnachteile, da Prioritätskonflikte für die beiden Teile der Prioritätszahl nacheinander gelöst werden müssen und hierfür zeitlich geeignete Steuersignale verwendet werden müssen. Die lineare Codierung der Teile der Prioritätszahl ergibt einen hohen Aufwand an Funktionselementen.

Der vorliegenden Erfindung liegt daher die Aufgabe zugrunde, eine Prioritätseinrichtung für eine geteilte Daten-Sammelleitung anzugeben, die trotz hoher Arbeitsgeschwindigkeit mit relativ langsam arbeitenden Schaltelementen auskommt.

Die Lösung dieser Aufgabe und Ausgestaltungen dieser Lösung sind in den Ansprüchen gekennzeichnet.

Dadurch, dass die in jeder Einheit vorgesehenen Zähler nur die höherwertigen Bits der Prioritätszahl abzählen, ergibt sich eine äusserst niedrige Abzählfrequenz und damit die Möglichkeit, langsamere und daher billige Bauelemente verwenden zu können. Dabei erleidet die Prioritätseinrichtung an sich im Vergleich zu den bekannten Einrichtungen jedoch keine Geschwindigkeitseinbusse und auch keine Einbusse bzgl. der maximalen Anzahl anzuschliessender Einheiten. Auch bezüglich der Schaltelemente, die an die einzelnen Leitungen der Anforderungssammelleitung angeschlossen sind, gilt das gleiche, wie für den Zähler, nämlich dass auch diese Schaltelemente mit niedrigerer Arbeitsgeschwindigkeit arbeiten, wobei auch an die einzelnen Leitungen keine hohen Anforderungen bezüglich des übertragenden Frequenzbandes gestellt werden müssen. Die Aufteilung der Prioritätssteuerung auf die einzelnen Einheiten, d.h. die Abkehr von einer zentralen Prioritätssteuerung, verschafft einen weiteren Zeitgewinn.

Die Erfindung soll nun anhand eines in den Figuren dargestellten Ausführungsbeispieles beschrieben werden.

Es zeigen:

Fig. 1 ein Blockschema einer Übertragungseinrichtung mit mehreren Anschlusseinheiten, einer Daten-Sammelleitung und einer Anforderungs-Sammelleitung,

Fig. 2 die Prioritätseinrichtung in jeder Anschlusseinheit und

Fig. 3 die zeitliche Kurvenform einzelner Signale, die in der Einrichtung gemäss Fig. 2 auftreten.

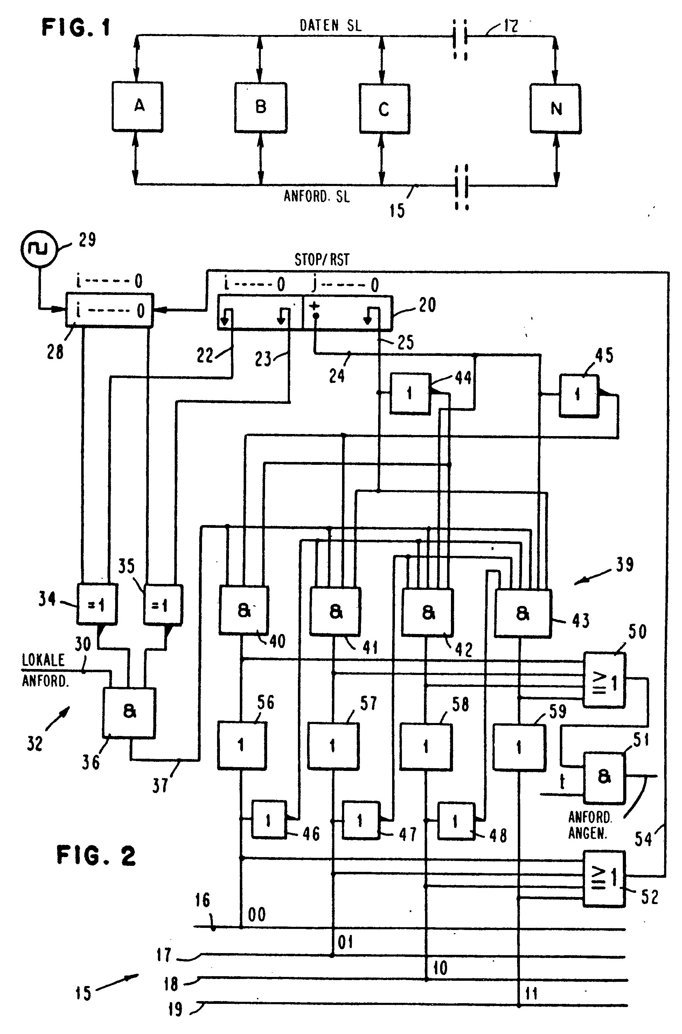

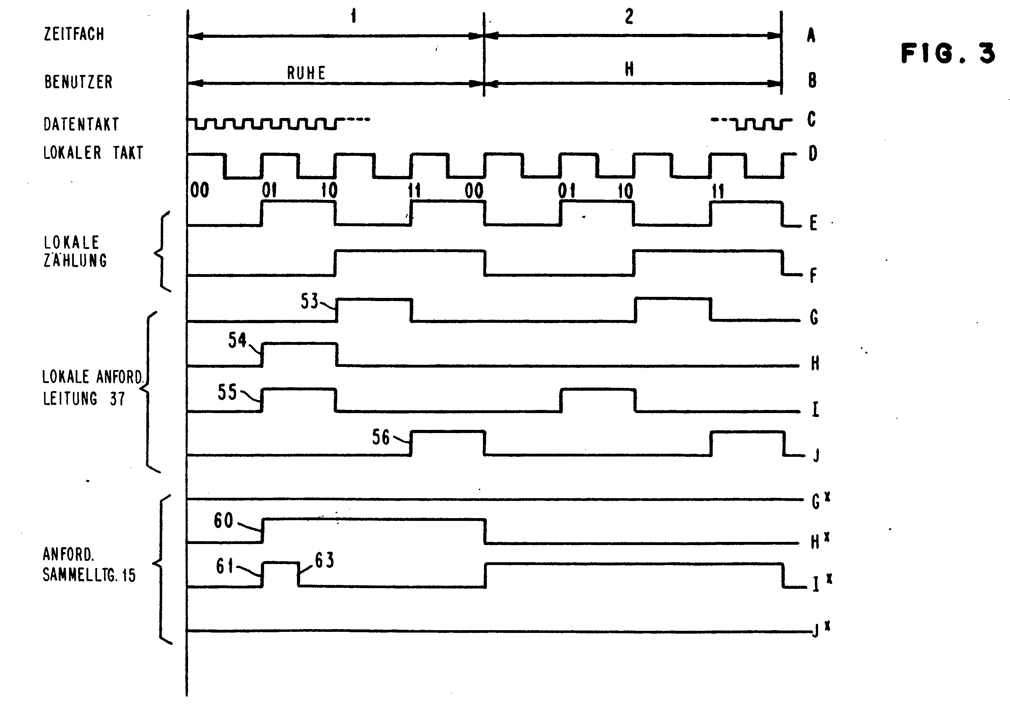

Die Übertragungseinrichtung, in der die vorliegende Erfindung Verwendung findet, ist in Fig. 1 dargestellt. Fig. 1 zeigt eine Daten-Sammelleitung 12 über die eine Anzahl von Anschlusseinheiten A, B. C, ..., N einer Datenverarbeitungsanlage miteinander kommunizieren können. Die Gesamtanzahl der angeschlossenen Einheiten soll nachfolgend mit N bezeichnet werden. Die Datensammelleitung 12 kann beispielsweise aus einem Koaxialkabel für serielle Datenübertragung in aufeinanderfolgenden Zeitfächern gleicher Dauer bestehen. Eine solche, gebräuchliche Übertragungsweise ist in Fig. 3, Zeilen A, B und C gezeigt, wobei jedes Zeitfach durch einen Taktgenerator in 16 Bitzeiten unterteilt ist. Fig. 3 zeigt in Zeile A zwei Zeitfächer 1 und 2. Während des Zeitfaches 1 ist die Einrichtung in Ruhe, wobei jedoch während dieses Zeitfaches ein Vorgang zur Zuteilung der Priorität an eine der Einrichtungen abläuft. Die Einrichtung, die Priorität erhält, kann dann im Zeitfach 2 Daten übertragen.

Die in Fig. 1 gezeigte Übertragungseinrichtung enthält auch eine Anforderungs-Sammelleitung 15 über die das Signal einer Einheit übertragen wird, der die Priorität über das nächste Zeitfach gewährt wurde. Die Sammelleitung 15 besteht aus zwei oder mehr einzelnen Leitungen.

Zum Verständnis der vorliegenden Erfindung soll nun auf die nachfolgende Tabelle 1 Bezug genommen werden.

Tabelle 1

|    | 00 | 01 | 10 | 11 |
|----|----|----|----|----|
| 00 | E  | P  | A  | K  |
| 01 | F  | H  | I  | C  |
| 10 | G  | B  | L  | O  |
| 11 | D  | M  | N  | J  |

Beispielsweise soll nachfolgend angenommen werden, dass die Gesamtanzahl der angeschlossenen Einheiten $n = 16$ beträgt. Die in Form von Prioritätswerten den einzelnen Einheiten zugeteilten Prioritäten können wie in Tabelle 1 gezeigt in Form einer Matrix dargestellt werden. Die gezeigte Matrix weist M Zeilen und N Spalten auf, wobei bei binärer Adressierung der Zeilen und Spalten der Matrix zur Adressierung der Zeilen i und zur Adressierung der Spalten j Bits benötigt werden: $2^i = M$, und $2^j = N$. Die maximal mögliche Anzahl anzuschliessender Einheiten beträgt $n = M.N$. Erfindungsgemäss wird also die einer Einheit zugewiesene Prioritätszahl in i höherwertige und j niederwertige Bits aufgeteilt. Beispielsweise hat die Einheit A gemäss der ersten Zeile und der dritten Spalte der Tabelle 1 die höherwertigen Bits 00 und die niederwertigen Bits 10. Erfindungsgemäss werden die höherwertigen Bits von einem Zähler abgezählt und sind in der Anforderungs-Sammelleitung eine Anzahl N Leitungen vorgesehen. Eine dieser Leitungen kann durch die j niederwertigen Bits ausgewählt werden. Die aus den Bits i und j bestehende Prioritätszahl wird in jeder Einheit gespeichert, wie es nachfolgend anhand der Fig. 2 näher beschrieben ist.

Die in Fig. 2 gezeigte Anforderungs-Sammelleitung 15 besteht aus vier einzelnen Leitungen 16, 17, 18 und 19, die den Prioritätswerten 00, 01, 10 und 11 entsprechen. Jede Anschlusseinheit enthält Logikschaltungen, welche ein Prioritätssignal auf eine dieser Leitungen geben können und die auf Prioritätssignale anderer Einheiten auf diesen einzelnen Anforderungsleitungen ansprechen. Im gezeigten Beispiel haben vier oder weniger Einheiten Zugriff zu der Sammelleitung während eines Unter-Zeitfaches eines Zeitfaches und wenn mehr als eine dieser vier Einheiten ein Anforderungssignal abgibt, erhält nur die Einheit mit der höchsten Priorität im nächsten Zeitfach die Verfügung über die Daten-Sammelleitung.

Zur Abspeicherung des Prioritätscodes ist in jeder Einheit ein Register 20 oder eine ähnliche Einrichtung vorgesehen. Dieses Register kann beispielsweise von einem zentralen Prozessor geladen werden, es kann von Hand durch die Verbindung einzelner Drähte gesetzt werden, von einem externen Terminal geladen werden, usw. In Fig. 2 wird das Register 20 entsprechend der früher für die Einheit A genannten Prioritätszahl 0010 mit den Bits 00 im höherwertigen Teil und den Bits 10 im niederwertigen Teil des Registers 20 geladen. Beispielsweise können hierzu die den höherwertigen Speicherstellen entsprechenden Leitungen 22 und 23 beide mit O-Potential und die den niederwertigen Speicherstellen entsprechenden Leitungen 24 und 25 mit positivem und O-Potential verbunden werden.

Jede Einheit weist auf einen Zähler 28 auf, der im vorliegenden Fall zwei Bitpositionen enthält, da i = 2 ist. Dieser Zähler wird von einer Taktquelle 29 fortgeschaltet. Die Zähler in den einzelnen Einheiten werden synchron zueinander fortgeschaltet.

Die in Fig. 2 gezeigte Prioritätseinrichtung wird aktiviert, wenn die betreffende Einheit ein lokales Anforderungssignal auf der Leitung 30 abgibt, d. h. wenn die betreffende Einheit Daten zu übertragen wünscht. Eine Vergleichsschaltung 32 weist zwei invertierende EXKLUSIV-ODER-Glieder 34 und 35, eines für jede Bitposition des höherwertigen Teiles des Registers 20 auf. Ein UND-Glied 36 spricht auf das lokale Anforderungssignal und die Ausgangssignale der Vergleichsschaltung an und erzeugt ein Ausgangssignal 37, wenn Gleichheit zwischen dem lokal gespeicherten Prioritätscode und dem im Zähler 28 enthaltenen Zählerstand vorliegt, und wenn das lokale Anforderungssignal 30 anliegt.

Das Signal auf der Leitung 37 erzeugt ein Anforderungssignal auf einer der Leitungen 16 bis 19, wobei die betreffende Leitung durch die niederwertigen Bits im Register 20 definiert ist. Fig. 2 zeigt eine Decodierschaltung 39 um die beiden niederwertigen Bits im Register 20 zu decodieren und das Anforderungssignal 37 auf die gewünschte Leitung zu geben. Die gezeigte Decodierschaltung weist Torschaltungen 40 bis 43 und Inverter 44 und 45 auf. Im gezeigten Ausführungsbeispiel sind die niederwertigen Bits 10 im Register 20 gespeichert, so dass die gespeicherte 0 über die Leitung 25 die UND-Glieder 41 und 43 inhibiert und über den Inverter 44 die UND-Glieder 40 und 42 vorbereitet. Das 1-Bit wird über die Leitung 24 dem Inverter 45 zugeführt und inhibiert die UND-Glieder 40 und 41. Die gespeicherte 1 wird anderseits über die Leitung 24 nicht invertiert den UND-Gliedern 42 und 43 zugeführt und bereitet diese UND-Glieder vor.

Durch das Signal 37 wird also nur das UND-Glied 42 durchgeschaltet und erzeugt ein Anforderungssignal auf der Leitung 18, die dem Prioritätswert 10 zugewiesen ist. Die Logikglieder des Decodierers 39 sprechen aber nicht nur auf das Anforderungssignal 37 an, sondern auch auf Signale von den einzelnen Leitungen 16 bis 19 der Anforderungsleitung 15. Zu diesem Zwecke sind die Inverterschaltungen 46, 47 und 48 vorgesehen, deren Ausgänge mit Eingängen der UND-Glieder 41, 42 und 43 verbunden sind, wobei diese UND-Glieder den Leitungen jeweils niedrigerer Priorität zugewiesen sind.

Der Decodierer 39 erzeugt über das UND-Glied 51 ein Signal «Anforderung übernommen», wenn nur das von der eigenen Einheit abgegebenen Anforderungssignal 30 auf der Sammelleitung 15 überbleibt und alle Anforderungssignale niedrigerer Priorität vom Decodierer zurückgewiesen wurden. Das UND-Glied 51 wird vom ODER-Glied 50 gespeist, dessen Eingänge mit den Ausgängen der UND-Glieder 40 bis 43 verbunden sind. Das UND-Glied 51 wird zur Zeit t durchgeschaltet, zu der alle Signale niedrigerer Priorität von der Anforderungssammelleitung 15 entfernt sein müssen. Dies ist später anhand von Fig. 3, Zeile I^x dargestellt. Das benötigte Taktsignal kann vom Zähler 28 abgeleitet werden.

Ferner ist eine ODER-Schaltung 52 vorgesehen, die ein Ausgangssignal abgibt, wenn auf einer der Leitungen 16 bis 19 ein Signal anliegt. Diese zeigt das Ende der Prioritätsbewerbung von mehreren Einheiten an und über das Signal auf der Leitung 54 wird der Zähler 28 angehalten oder zurückgestellt. Die Torschaltungen 56 bis 89 isolieren das ODER-Glied 50 von Signalen auf den Leitungen 16 bis 19. Die Anwesenheit eines Signales von irgendeiner Einheit auf der Sammelleitung 15 hält den Zähler 28 an und das Ende dieses Signales setzt den Zähler wieder in Betrieb und stellt ihn vorzugsweise zu Beginn der nächsten Bewerbungsperiode zurück.

Die in Fig. 2 gezeigte Logik ist nur als Beispiel gedacht und es können selbstverständlich zur Erzeugung der benötigten Signale auch andere Logikrealisierungen verwendet werden.

Die Funktionsweise der Prioritätseinrichtung nach der vorliegenden Erfindung soll nun anhand von Fig. 3 näher erklärt werden. Dabei ist gemäss den vorhergehenden Ausführungen angenommen, dass nur vier Einheiten zugleich während eines Zeitfaches Anforderungssignale abgeben können. Diese vier Einheiten sollen nachfolgend mit G, H, I und J bezeichnet werden, welche Bezeichnungen sich auch zu den betreffenden Zeilen in Fig. 3 wiederfinden. Die diesen vier Einheiten zugeteilten Prioritätszahlen sind in der nachfolgenden Tabelle 2 dargestellt.

Tabelle 2

| | |
|---|---|
| G | 1000 |
| H | 0101 |
| I | 0110 |
| J | 1111 |

Es wurden im vorliegenden Beispiel für die beiden niederwertigen Bits zu den vier Einheiten jeweils verschiedene Werte gewählt um ein illustratives Beispiel zu erhalten. Die beschriebene Prioritätseinrichtung funktioniert aber auch, wenn die beiden Bits zu zwei konkurrierenden Einheiten gleich sind, sofern natürlich die beiden betreffenden hochwertigen Bits verschieden sind. Die beiden hochwertigen Bits sind in Beziehung zu setzen zum Zählerstand des Zählers 28 und sind in den Zeilen E und F in Fig. 3 dargestellt. Zeile E zeigt das Bit mit der niedrigeren Wertigkeit und Zeile F das Bit mit der höchsten Wertigkeit der beiden hochwertigen Bits der Prioritätszahl. Da diese beiden Bits zu der Einheit G den Wert 10 haben, erzeugt diese Einheit ein Anforderungssignal auf der Leitung 37 wenn der Zählerstand 10 in Fig. 3, Zeilen E und F, erreicht wird. Das betreffende Signal auf der Leitung 37 ist bei 53 in Fig. 3 gezeigt. In ähnlicher Weise ist zu den Einheiten H und I mit der hochwertigen Prioritätszahl 01 der durch das Anforderungssignal 37 entstehende Signalübergang bei 54 und 55 in Fig. 3 dargestellt. Die Einheit J erzeugt diesen Signalübergang ihrer Anforderungsleitung 37 beim lokalen Zählstand 11, wie bei 56 in Fig. 3 dargestellt ist. Die genannten Signale verschwinden wieder mit dem nächsten Fortschalten des Zählers 28, erscheinen jedoch wieder beim entsprechenden Zählerstand im nächsten Zeitfach, wenn die betreffende Einheit noch immer Zugriff zur Sammelleitung anfordert. Die beiden hochwertigen Bits der Prioritätszahl und die Vergleichsschaltung 32 verteilen also die Einheiten G, H, I und N in drei Unter-Zeitfächer, derart, dass die Einheiten H und I früher ein Anforderungssignal erzeugen (54, 55) als die Einheit G (53), während diese Einheit wiederum früher ein Anforderungssignal erzeugt als die Einheit J (56).

In Fig. 3 sind in den Zeilen $G^x$, $H^x$, $I^x$ und $J^x$ die Signale erzeugt, die auf den diesen Einheiten zugewiesenen Anforderungsleitungen 16 bis 19 erscheinen. Beim Zählstand 01 stellen die Einheiten H und I Gleichheit zwischen dem Zählstand ihres lokalen Zählers 28 und den im Register 20 gespeicherten hochwertigen Bits fest und es wird das UND-Glied 41 in der Einheit H sowie das UND-Glied 42 in der Einheit I gleichzeitig durchgeschaltet, was zu den in Fig. 3 mit 60 und 61 bezeichneten Signalen in den Zeilen $H^x$ und $I^x$ führt. In der Einheit I wirkt das auf der Leitung 17 durch die Einheit H erzeugte Signal als Inhibiereingang zum UND-Glied 42 und das Signal auf der Leitung 18 fällt bei 63 in Fig. 3. Das Signal auf der Leitung 17 bleibt jedoch während des Restes des Zeitfaches 1 anwesend und verhindert, dass die Einheiten G und H Signale auf den Leitungen 16 und 19 zu späteren Unter-Zeitfächern im Zeitfach 1 erzeugen. Als Reaktion auf die Anwesenheit des Signales am Ausgang des ODER-Gliedes 50 zur Zeit t nach dem Signalübergang 63 (Fig. 3) wird das Signal «Anforderung angenommen» am Ausgang des UND-Gliedes 51 in der Einheit H erzeugt. Als Folge hiervon kann die Einheit H im nächsten Zeitfach ihre Datenübertragung beginnen. Der Wegfall des Signales auf der Leitung 54 startet den Zähler 28 wieder, der daraufhin vorzugsweise mit dem Zählstand 0000 beginnend synchron zu den Zählern in den anderen Einheiten fortschaltet. Diese Arbeitsweise des Zählers 28 bringt mit sich, dass die in den Zeilen E und F in Fig. 3 gezeigten Signale bis zum Ende des Zeitfaches 1 anwesend bleiben. Nach einer anderen möglichen Ausführungsform kann der Zähler laufend weiterschalten und wird die Leitung 37 je nach zugeteilter Priorität im aktiven oder nichtaktiven Zustand verriegelt.

## Patentansprüche

1. Prioritätseinrichtung für eine Einheit (z. B. A), einer Datenverarbeitungsanlage, die mit einer Vielzahl von Einheiten (A, B, C, ..., N) dieser Datenverarbeitungsanlage an eine Daten-Sammelleitung (12) angeschlossen ist, wobei die Priorität jeder Einheit durch eine ihr zugewiesene Zahl gegeben ist und alle Einheiten untereinander über eine Anforderungs-Sammelleitung (15) verbunden e sind, über die Anforderungssignale von und zu allen Einheiten übertragen werden, mit einem von Taktimpulsen fortgeschalteten Zähler (28) und einem Register (20) zur Speicherung der zugewiesenen Prioritätszahl sowie einem Vergleicher (32) zum Vergleich des Zählerstandes mit der Prioritätszahl und zur Weitergabe eines Anforderungssignales einer Einheit bei Gleichheit, wenn auf der Anforderungssammelleitung kein Anforderungssignal höherer Priorität einer Einheit anliegt, dadurch gekennzeichnet, dass das Register (20) aus zwei Teilen zur Speicherung eines höherwertigen Teiles (Bits i) und eines niederwertigen Teiles (Bits j) der Prioritätszahl besteht, dass nur der höherwertige Teil (Bits i) mit dem Vergleicher (32) verbunden ist, dass ferner ein Decodierer (39) zur Decodierung der niederwertigen Bits (j-Bits) und zur Abgabe eines Decodierungssignales auf eine von $2^j$-Leitungen (16–19) der Anforderungs-Sammelleitung (15) vorgesehen ist, wobei der Decodierer vom Ausgangssignal (37) des Vergleichers durchgeschaltet wird und das Decodierungssignal nur abgibt, wenn auf einer der $2^j$-Leitungen der Anforderungs-Sammelleitung (15) kein Decodierungssignal einer der anderen Einheiten mit einer sich aus den niederwertigen Bits ergebenden höheren Priorität anliegt, dass die Zähler (28) aller Einheiten synchron fortgeschaltet werden und dass die Abgabe eines Decodierungssignales die Zähler (28) anhält oder zurückstellt.

2. Einrichtung nach Anspruch 1, dadurch gekennzeichnet, dass während eines zur Übertragung einer Nachricht vorgesehenen Zeitfaches (1, 2, Fig. 3) ein eventuell auftretendes Prioritätsproblem gelöst wird und dass im nächstfolgenden Zeitfach die Einheit eine Nachricht übertragen kann, deren Anforderungssignal im vorhergehenden Zeitfach angenommen wurde.

3. Einrichtung nach Anspruch 1, dadurch gekennzeichnet, dass jedes Zeitfach durch den Zähler (28) in $2^i$ Unter-Zeitfächer unterteilt wird und dass in jedem Unter-Zeitfach Prioritätsprobleme zwischen zwei Einheiten mit gleicher, durch die i-Bits gegebene Priorität, jedoch mit ungleicher durch die j-Bits gegebene Priorität gelöst werden.

4. Einrichtung nach Anspruch 1, dadurch gekennzeichnet, dass im Decodierer (39) ein UND-Glied (51) zum Wirksamwerden des Anforderungssignales vorgesehen ist, welches zu einem Zeitpunkt (t) durchgeschaltet wird, zu dem die eventuellen Anforderungssignale niedrigerer Priorität anderer Einheiten im Decodierer unwirksam geworden sind.

## Claims

1. Priority system for a unit (e.g. A) of a data processing system which with a multitude of units (A, B, C, ..., N) of this data processing system is connected to a data bus (12), the priority of each unit being given by its associated number, and all units being interconnected via a request bus (15) via which request signals from and to all units are transmitted, with a counter (28) incremented by clock pulses, and with a register (20) to store the associated priority number, and a compare circuit (32) to compare the count with the priority number, and to pass on a request signal of a unit in case of uniformity if on the request bus there is no request signal of higher priority of a unit, characterized in that the register (20) consists of two parts to store a higher value part (bits i) and a lower value part (bits j) of the priority number, that only the higher value part (bits i) is connected to the compare circuit (32), that furthermore a decoder (39) is provided to decode the lower value bits (bits j) and to emit a decoding signal to one of $2^j$ lines (16–19) of the request bus (15), the decoder being switched by the output signal (37) of the compare circuit, and emitting the decoding signal only if on one of the $2^j$ lines of the request bus (15) there is no decoding signal of one of the other units with a higher priority resulting from the lower value bits, that the counters (28) of all units are switched synchronously, and that a decoding signal stops or resets the counters (28).

2. System as claimed in claim 1, characterized in that during a time slot (1, 2, Fig. 3) provided for transmitting information a possibly appearing priority problem is solved, and that in the subsequent time slot the unit can transmit an information whose request signal had been taken in the preceding time slot.

3. System as claimed in claim 1, characterized in that each time slot is divided by the counter (28) into $2^i$ sub-slots, and that in each sub-slot priority problems between two units are settled with equal priority given by the i bits, but with unequal priority given by the j bits.

4. System as claimed in claim 1, characterized in that in the decoder (39) and AND gate (51) to activate the request signal is provided which is switched at a time (t) when the possible request signals of lower priority from other units in the decoder have become ineffective.

## Revendications

1. Dispositif de priorité pour une unité (par exemple A) d'une installation de traitement de données, qui est raccordée à un bus (12) de transmission de données, par l'intermédiaire d'une multiplicité d'unités (A, B, C, ..., N) de cette installation de traitement de données, et dans lequel la priorité de chaque unité est fournie par un nombre qui lui est associé et toutes les unités sont reliées entre elles par l'intermédiaire d'un bus (15) de transmission de demandes, grâce auquel des signaux de demande sont transmis à partir et en direction de toutes les unités, et comportant un compteur (28) avancé par des impulsions de cadence et un registre (20) servant à mémoriser le nombre de priorité associé, ainsi qu'un comparateur (32) servant à comparer l'état de comptage au nombre de priorité et à retransmettre un signal de demande d'une unité en cas d'égalité, lorsqu'aucun signal de demande de priorité supérieur d'une unité n'est présent dans le bus de transmission des demandes, caractérisé en ce que le registre (20) est constitué de deux parties servant à mémoriser une partie de poids supérieur (bits i) et une partie de poids inférieur (bits j) du nombre de priorité, que seule la partie de poids supérieur est reliée au comparateur (32), qu'il est prévu en outre un décodeur (39) servant à décoder les bits de poids inférieur (j bits) et à délivrer un signal de décodage à l'une parmi $2^j$ lignes (16–19) du bus (15) de transmission de demandes, le décodeur étant rendu passant par le signal de sortie (37) du comparateur et ne délivrant le signal de décodage que lorsqu'aucun signal de décodage possédant une priorité supérieure fournie par les bits de poids inférieur n'est présent dans l'une des ($2^j$) lignes du bus (15) de transmission de demandes, et que les compteurs (28) de toutes les unités sont avancés en synchronisme et que la délivrance d'un signal de décodage arrête ou ramène à zéro les compteurs (28).

2. Dispositif selon la revendication 1, caractérisé en ce que pendant un créneau temporel (1, 2, figure 3), prévu pour la transmission d'une information, un problème de priorité apparaissant éventuellement est résolu et que pendant le créneau temporel immédiatement suivant, l'unité peut transmettre une information dont le signal de demande a été accepté pendant le créneau temporel précédent.

3. Dispositif selon la revendication 1, caractérisé par le fait que chaque créneau temporel est subdivisé par le compteur (28) en $2^i$ créneaux temporels partiels et que, dans chaque créneau temporel partiel, des problèmes de priorité entre deux unités possédant une même priorité déterminée par les i bits, mais ayant une priorité différente déterminée par les j bits peuvent être résolues.

4. Dispositif selon la revendication 1, caractérisé en ce que dans le décodeur (39) se trouve prévu un circuit ET (51) servant à rendre actif le signal de demande et qui est rendu passant à l'instant (t) auquel les signaux éventuels de demande ayant une priorité inférieure d'autres unités dans le décodeur sont devenus inactifs.

0 031 485

**FIG. 1**

**FIG. 2**

7

FIG. 3